# FASCICULE DE BREVET EUROPEEN

(11) **EP 0 433 200 B1**
(45) Date de publication et mention de la délivrance du brevet: **24.05.1995**
(21) Numéro de dépôt: 90460047.5
(22) Date de dépôt: 07.12.1990
(51) Int. Cl.: B01D 65/08, B01D 61/16

(54) **Procédé pour la filtration et l épuration de l eau**
Verfahren zur Filtrierung und Reinigung von Wasser
Water filtration and purification process

(30) Priorité: 11.12.1989 FR 8916527
(43) Date de publication de la demande: 19.06.1991
(73) Titulaire: GIE ANJOU-RECHERCHE, F-78600 Maisons Laffitte (FR)
(72) Inventeur: Faivre, Michel, F-78260 Acheres (FR); Tazy-Pain, Annie, F-92600 Asnieres (FR)
(74) Mandataire: Corlau, Vincent

(56) Documents cités:
- EP-A- 0 165 744
- FR-A- 2 389 400
- US-A- 3 992 301
- CHEMICAL ABSTRACTS, vol. 109, no. 2, 11 juillet 1988, page 318, résumé no.11477f, Columbus, Ohio, US; W.B. BEDWELL et al.: "Crossflow microfiltration-fouling mechanisms studies"
- CHEMICAL ABSTRACTS, vol. 111, no. 16, 16 octobre 1989, page 378, résumé no.140167v, Columbus, Ohio, US; &JP-A-01 04 289 (JAPAN ORGANO CO., LTD) 09-01-1989

## Description

Le domaine de l'invention est celui des installations de filtration et d'épuration des eaux du type comprenant une boucle de circulation des eaux à traiter incluant au moins une membrane de filtration tangentielle.

L'installation de l'invention s'applique préférentiellement à l'épuration des eaux de surface, mais l'homme du métier pourra envisager d'en utiliser le principe pour le traitement des eaux usées ou brutes à d'autres étapes de la chaîne d'épuration.

Le traitement d'eau en vue de la distribution d'eau de consommation, compte tenu des normes aujourd'hui en vigueur, a les objectifs principaux suivants:
- éliminer les matières en suspension,
- éliminer les matières organiques,
- éliminer les ions gênants,
- stériliser.

La chaîne de traitement classique comprend la plupart du temps une succession d'étapes physico-chimiques du type coagulation-floculation-décantation-filtration.

L'étape de filtration pour laquelle la présente invention propose une nouvelle installation de mise en oeuvre, permet d'affiner le traitement et de retenir la plus grande partie des réactifs résiduels.

De façon connue, on appelle tangentielle toute filtration où le fluide à filtrer circule sous pression parallèlement à la surface filtrante par opposition à la filtration frontale où le fluide circule perpendiculairement à cette même surface.

Les avantages de la filtration tangentielle avec membranes minérales sur la filtration classique sont nombreux et en particulier :
- l'inertie chimique, thermique, et bactériologique des membranes minérales,
- la limitation des colmatages trop rapides grâce à l'auto-nettoyage de la surface filtrante par entraînement des particules non filtrées du fait de la vitesse de circulation tangentielle de l'eau brute.

Ultra et microfiltration tangentielles sur membranes minérales sont considérées comme d'excellentes méthodes de traitement et de potabilisation des eaux pour de petites installations. Elles sont généralement mises en oeuvre dans une boucle de circulation du liquide à traiter, une partie du liquide (le perméat) traversant la membrane tandis que le filtrat reste dans la boucle.

L'ultrafiltration est une technique de séparation sous pression des macromolécules dissoutes ou en suspension, des bactéries (diamètre compris entre 0,5 et 10 microns), des virus (diamètre minimum : 20 nanomètres) et autres microorganismes, par une membrane assymétrique dont la taille des pores varie entre 1 nanomètre et 0,1 microns.

Pour la microfiltration, le diamètre des pores varie entre 0,1 et 10 microns.

L'un des problèmes cruciaux rencontrés dans les membranes tangentielles est le colmatage, qui peut prendre plusieurs formes :
- le colmatage de surface : lorsque la filtration s'opére, il existe toujours au contact de la membrane une couche limite immobile de solution d'où l'eau est continuellement extraite et où le soluté retenu s'accumule à des concentrations anormalement élevées. Ce phénomène est appelé polarisation de concentration et aboutit à la formation d'une couche dite de polarisation. La vitesse de circulation du fluide qui circule tangentiellement à la membrane doit être suffisamment importante pour provoquer un auto-nettoyage de la membrane et limiter la formation de la couche de polarisation et donc le colmatage progressif de la membrane par précipitation des produits à la surface de cette membrane ;
- le colmatage interne : parmi les particules susceptibles de traverser une membrane de microfiltration, il en existe, en particulier des colloïdes, dont la taille est très légèrement inférieure à celle des pores de la membrane dans lesquels elles pénètrent et floculent en provoquant un colmatage irréversible ;
- le colmatage chimique : causé essentiellement par des substances à propriété hydrophobe du type des protéines et des particules huileuses.

A la suite de l'opération de filtration, on sait que l'eau doit être ensuite débarrassée des micro-organismes pathogènes à l'aide d'oxydants (ozone, chlore...) ou de rayonnements (U.V) ou encore d'un traitement d'affinage au charbon actif en grains ou en poudre (élimination des micropolluants, des métaux lourds à l'état de trace, et des mauvais goûts et saveurs).

L'utilisation de l'ozone est reconnue non seulement comme efficace dans les conditions bactéricides et virulicides, mais aussi dans des étapes de traitement combinés ozonation-coagulation, ozonation-flottation, ozonation-adsorption sur média filtrant, sans oublier les applications plus classiques telles que la déferrisation-démanganisation ou l'élimination de la couleur des goûts et des odeurs. Enfin, on sait que l'ozone possède une action oxydante sur un certain nombre de micropolluants (phénols, certains détergents,...) (voir B. Langlais, "Nouveau développement de l'ozonation en eau potable et technologie appropriée" *in* L'eau l'industrie, les nuisances, n° 109, avril 1987, pp. 28 à 30).

Toutefois, l'ozonation trouve deux limitations importantes :
- lorsqu'on utilise un oxydant, le chlore est généralement choisi pour assurer le rôle de désinfection (à la place de l'ozone, par rayonnements U.V...) à cause de son effet rémanent qui permet d'éviter les recontaminations éventuelles lors du stockage de l'eau traitée ou de son transfert dans les canalisations de distribution ;
- d'autre part, l'utilisation d'un gaz est fortement déconseillée dans des boucles de filtration à membrane tangentielle. En effet, l'injection de gaz se fait sous forme de bulles de façon à réaliser un optimum de transfert gaz/liquide. Or, on sait qu'il peut se produire un colmatage des membranes par la détente des bulles dans la membrane. Comme décrit par F. Duclert et M. Rumeau dans "Microfiltration d'eau sur membranes minérales. Influence des sels et des gaz", (Liquides Magazines n°9, Jan-Fév 1989), à propos de l'air dissous dans l'eau, au passage dans la membrane la solution pressurisée est libérée à la pression atmosphérique et l'air dissous "précipite" par phénomène d'effervescence, donnant naissance à des microbulles d'air à l'intérieur des pores. Par coalescence, ces bulles peuvent alors provoquer une occlusion des pores de la membrane.

L'invention a pour objectif de fournir un nouveau procédé pour la filtration à membrane tangentielle avec injection d'ozone, malgré les inconvénients et limitations reconnus dans l'état de la technique.

Un autre objectif de l'invention est de fournir un procédé pour l'épuration de liquide qui permet également de limiter les colmatages de surface, interne et chimique de la membrane.

Un objectif complémentaire de l'invention est de fournir un procédé comprenant plusieurs configurations de mise en oeuvre, notamment pour l'injection d'ozone, en fonction de la nature du liquide à traiter.

Ces objectifs, ainsi que d'autres qui apparaîtront par la suite, sont atteints à l'aide du procédé selon la revendication 1.

Selon l'invention, il apparaît que, contrairement à l'enseignement de l'état de la technique, les trains de microbulles ont un effet de décolmatage du fait de la réduction de la couche limite par les turbulences créées par le déplacement des bulles. Cet effet positif combiné à l'effet chimique d'oxydation du gaz (singulièrement lorsque le gaz oxydant est l'ozone) est, de façon imprévue, prépondérant par rapport au risque de colmatage par la détente du gaz dans la membrane.

Préférentiellement, la taille des microbulles est de 10 »m à 2 mm de diamètre, le taux et la concentration du gaz adjoint au liquide à traiter sont variables en fonction de la qualité du liquide à traiter, et ledit gaz oxydant est l'air ozoné.

Avantageusement, ledit liquide à traiter reçoit un conditionnement chimique préalable en amont de ladite boucle de filtration.

Ladite boucle de filtration comprend préférentiellement un pot de dégazage adapté à la protection de la pompe de recirculation contre lesdites microbulles.

Dans un mode de réalisation particulier, notamment pour le traitement des eaux chargées en matières organiques, ladite boucle de filtration comprend des moyens d'injection de doses déterminées de réactifs chimiques et/ou d'adsorbant, en aval desdits moyens d'injection de gaz oxydant tel que l'air ozoné.

Avantageusement, ledit adsorbant est du charbon actif.

L'invention permet donc la mise en oeuvre simultanée d'un processus d'ozonation et d'un traitement chimique au charbon actif, avec utilisation d'une membrane de filtration tangentielle, formant ainsi une synergie positive contribuant à une efficacité particulièrement élevée du processus de filtration.

Dans un autre mode de réalisation particulier, ladite boucle de circulation comprend des seconds moyens d'injection d'un gaz oxydant dans ladite boucle de filtration.

Lesdits moyens d'injection d'un gaz oxydant appartiennent au groupe comprenant les émulseurs montés en amont du pot de dégazage, les poreux placés dans le pot de dégazage, les dispositifs d'ozoflottation, et les cuves d'ozonation.

Dans le cas d'un dispositif d'ozoflottation, ladite ozonation est assurée par des poreux, dont le balayage est assuré par la conduite de recirculation.

Selon un autre mode de réalisation, l'introduction de l'ozone s'effectue par l'intermédiaire d'un émulseur.

Dans certains types de traitement, notamment dans le cas du traitement d'eaux fortement chargées en ammoniaque, ledit pot de dégazage est avantageusement constitué par un filtre biologique aéré. Préférentiellement, ledit filtre biologique comprend des matériaux supports de biomasse flottants, en amont desquels sont disposés les moyens d'injection dudit liquide à traiter.

D'autres caractéristiques et avantages de l'invention apparaîtront à la lecture de quelques modes de réalisation préférentiels de l'invention, donnés à titre illustratif et non limitatif, et des dessins annexés dans lesquels :
- la figure 1 représente un premier mode de réalisation simplifiée d'une boucle de filtration avec des moyens d'injection de microbulles d'ozone en amont d'une membrane de filtration tangentielle ;
- la figure 2 représente un second mode de réalisation d'une boucle de filtration, comprenant des moyens d'injection de réactifs chimiques et/ou d'adsorbant et un mélangeur statique entre les moyens d'injection d'ozone et la membrane de filtration tangentielle ;
- la figure 3 illustre, au sein d'un même schéma, deux modes de réalisation de seconds moyens d'injection d'ozone dans la boucle, par émulseur ou par des poreux situés dans le pot de dégazage de la boucle de filtration respectivement ;
- la figure 4 représente un cinquième mode de réalisation de la boucle avec conditionnement chimique en amont de la boucle de circulation ;
- la figure 5 représente un sixième mode de réalisation de la boucle comprenant un second dispositif d'injection d'ozone par poreux selon un processus d'ozoflottation sous pression ;
- la figure 6 représente un septième mode de réalisation d'une boucle de filtration selon l'invention avec un second dispositif d'injection d'ozone au moyen d'un émulseur mettant en oeuvre un processus d'ozoflottation sous pression ;
- la figure 7 représente un huitième mode de réalisation de la boucle comprenant un second dispositif d'injection d'ozone, par cuve d'ozonation mettant en oeuvre un processus d'ozoflottation sous pression ;
- la figure 8 représente un neuvième mode de réalisation d'une boucle de filtration comprenant un filtre biologique.
- la figure 9 est un diagramme illustrant les résultats positifs obtenus grâce à l'injection de microbulles d'ozone dans une boucle de traitement d'eau de Seine floculée selon le procédé de l'invention.

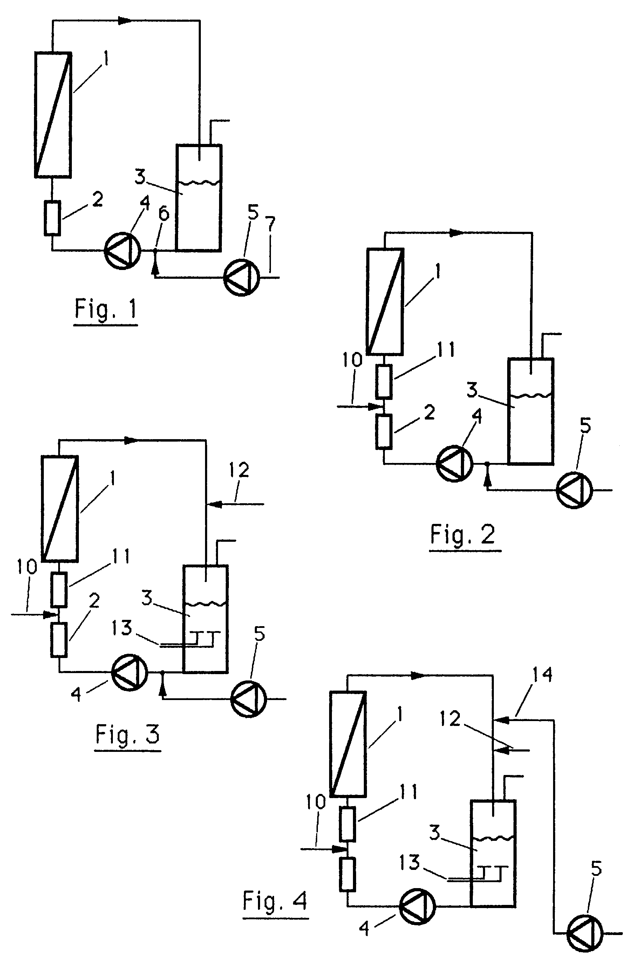

Comme représenté en figure 1, une boucle de filtration d'une installation, dans sa forme simplifiée, comporte une membrane tangentielle 1, un dispositif d'injection de microbulles d'ozone 2, une cuve de dégazage 3, et une pompe de recirculation 4. Le liquide à traiter est amené dans la boucle par une conduite 7 comprenant une pompe d'amenée 5. L'introduction du liquide à traiter dans la boucle est effectuée en un point 6 située entre la cuve de dégazage 3 et la pompe de recirculation 4.

Comme déjà mentionné, l'introduction de l'ozone sous forme de microbulles permet avantageusement de créer des turbulences accrues diminuant les couches limites du liquide circulant tangentiellement à la membrane de filtration 1. Ces turbulences contribuent à limiter le colmatage de la membrane, par l'action conjuguée liée à l'entraînement des particules de filtration, et à l'augmentation du transfert de l'ozone et des réactions d'oxydation. En d'autres termes, on peut identifier les effets positifs combinés suivants:
- diminution du pouvoir colmatant de l'eau, par diminution de la viscosité, et donc réduction de l'épaisseur des couches limites en accord avec les lois de la dynamique des fluides, d'où une augmentation du débit de perméat, autorisant une diminution de l'investissement de la surface membranaire ;
- attaque et réduction des matières organiques contenues dans l'eau à traiter ;
- effet désinfectant, notamment antibactérien de l'ozone ;
- diminution des goûts de l'eau ;
- augmentation de la durée de vie de la membrane, du fait de la diminution des agents colmatants.

Le gaz oxydant utilisé est l'ozone, du fait de son pouvoir oxydant et désinfectant.

Le dosage de la quantité d'ozone injectée sous forme de microbulles est effectué à un taux et à une concentration variables suivant la qualité de l'eau à traiter et le niveau de qualité souhaité pour l'eau traitée ; ce dosage est ainsi réalisé notamment de façon à obtenir un taux donné d'ozone dissous dans le liquide à traiter.

A titre d'exemple, il est avantageux d'obtenir un taux d'ozone dissous de l'ordre de 0 à 2 mg/l, tel que mesuré dans le perméat en sortie de la membrane.

Comme on le verra plus loin, le choix de l'ozone s'explique également du fait que des seconds moyens d'injection d'ozone peuvent être prévus dans la bouche de filtration, notamment dans le but de réaliser en outre un processus d'ozoflottation sous pression.

La membrane 1 de filtration tangentielle utilisée est avantageusement une membrane minérale, de type asymétrique ou encore composite.

De façon connue, les membranes asymétriques sont généralement réalisées en polymère de polysulfones, et présentent des pores en forme d'entonnoirs retournés. Cette caractéristique permet de réduire la perte de charge à travers la membrane par rapport aux membranes symétriques.

Les membranes composites sont quant à elles constituées d'une superposition de couches microporeuses homogènes dont la granulométrie diminue au fur et à mesure qu'on se rapproche de la surface filtrante. Le diamètre des pores est donc déterminé par la première couche qui est en contact direct avec le fluide à filtrer. On observe donc dans ce type de membrane également un effet d'entonnoir retourné, du fait que le perméat rencontre de plus en plus de "vide" à mesure qu'il traverse la membrane.

Dans l'état actuel des membranes mises sur le marché, l'utilisation de membranes organiques est déconseillée en présence d'ozone. Toutefois, il n'est pas à exclure que l'invention puisse également s'appliquer dans le cas de membranes organiques de filtration tangentielle, si celles-ci aient été rendues neutres par rapport à l'ozone injecté sous forme de microbulles.

Les moyens 2 d'injection d'ozone sont par exemple constitués par un émulseur (encore appelé trompe à vide ou hydroinjecteur). Il est également possible d'utiliser des appareils du type "Venturi" à émulsion, ou tout autre appareillage permettant la formation des microbulles de gaz oxydant dans le liquide à traiter.

La conduite 7 d'amenée du liquide à traiter comporte avantageusement des moyens de conditionnement chimique préalable du liquide.

On conçoit que l'ensemble des effets de traitement de l'eau, et d'injection des bulles réduit la vitesse de colmatage de la membrane 1. L'installation accroit donc considérablement la durée des cycles de filtration de la membrane, particulièrement si on y ajoute, le cas échéant, l'utilisation des processus habituels de décolmatage par inversion de flux, en retardant ainsi la périodicité des décolmatages chimiques.

Dans un mode de mise en oeuvre particulièrement avantageux, le décolmatage de la membrane est assuré en faisant fonctionner la boucle de circulation en circuit fermé, avec de l'eau claire, et en poursuivant l'injection des microbulles d'ozone. Cette opération permet de régénérer la membrane, sans modifier ou complexifier l'installation. Il vient notamment compléter, ou même se substituer, aux méthodes habituelles d'injection de soude et d'acide, qui requiert des dispositifs spécifiques.

Avantageusement, lors de ces opérations périodiques de régénération, on peut chercher à obtenir des taux d'ozone résiduel dissous dans le perméat, en sortie de la membrane, du même ordre que lors des cycles de traitement d'eau (0 à 2 mg/l).

L'opération de régénération par injection de microbulles d'ozone peut être effectuée ou non en combinaison avec des processus d'inversion de flux.

Dans le mode de réalisation de la figure 2, des moyens 10 d'injection de réactifs chimiques, et/ou d'adsorbants sont situés en aval des moyens 2 d'injection de microbulles d'ozone. Ces moyens d'injection 10 sont en outre situés en amont d'un mélangeur statique 11, qui favorise l'homogénéisation et l'action des réactifs injectés. On peut par exemple, à titre illustratif et non limitatif, utiliser un mélangeur statique en ligne. L'ajout des réactifs permet d'augmenter le débit de filtration. Les doses injectées sont déterminées en fonction de paramètres tels que la DCO (Demande Chimique en Oxygène) ou le COT (mesure du Carbone Organique Total), représentatifs du taux de matière organique dans l'eau à traiter, et traitée.

Les réactifs chimiques floculants sont par exemple du sulfate d'alumine, du polychlorure d'aluminium, ou encore du chlorure ferrique. Ces réactifs, donnés à titre non exhaustif, ont un effet de floculation, qui précipite les particules contenues dans l'eau, afin de permettre leur agglomération.

Dans le cas de l'injection d'un adsorbant, il est avantageux d'injecter du charbon actif. Le charbon actif, injecté sous forme de poudre présente un effet chimique positif pour le processus de filtration. Il est également possible de substituer au charbon actif de la lignite, de l'alumine active, ou encore une zéolite, sous forme macroproreuse ou microporeuse. Toutefois ces substitutifs sont généralement moins efficaces que le charbon actif.

L'installation de l'invention présente une synergie particulièrement intéressante dans la combinaison membrane à filtration tangentielle, microbulles d'ozone, et poudre de charbon actif.

La figure 3 illustre deux modes possibles d'injection d'ozone en un second point d'injection, dans la boucle de filtration. Il est particulièrement avantageux de prévoir un second point d'injection d'ozone dans le cas du traitement des eaux chargées en matières organiques, ou nécessitant une déferrisation ou une démanganisation.

Dans un premier mode de réalisation, l'injection s'effectue en un point 12, par exemple par l'intermédiaire d'un émulseur, en amont du pot de dégazage 3.

Dans un autre mode de réalisation, le deuxième point d'injection d'ozone est effectué par des poreux 13 placés dans le pot de dégazage 3.

Dans le mode de réalisation de la figure 4, l'injection d'eau à traiter est effectuée en amont de la boucle de circulation en un point 14. Ainsi, le liquide à traiter subit un conditionnement chimique avant d'être réintroduit dans un nouveau cycle de filtration.

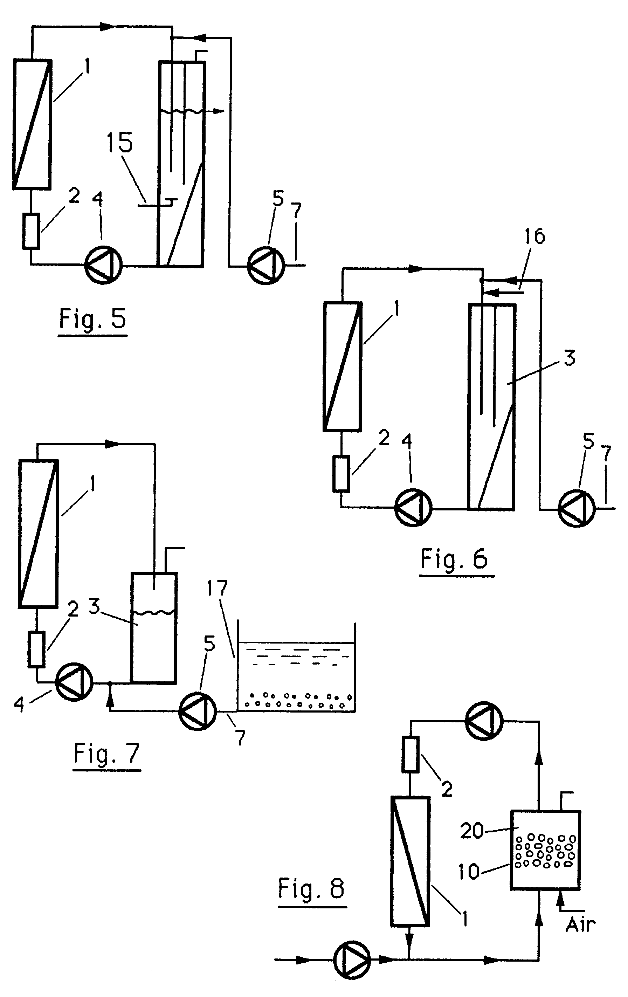

Les figures 5, 6 et 7 illustrent trois modes de réalisation correspondant à la mise en oeuvre d'un processus d'ozoflottation, sous pression ou non, par exemple, du type décrit dans le document FR-A-2 600 323.

Dans le cas du mode de réalisation de la figure 4, l'ozonation est assurée par des poreux 15, dont le balayage est assuré par la circulation dans la boucle.

Dans le cas de la figure 6, l'introduction de l'ozone s'effectue non plus par des poreux 15, mais par un émulseur 16 situé en amont du pot de dégazage et d'ozoflottation sous pression 3.

Enfin, le processus d'ozoflottation est mis en oeuvre en figure 7 en amont de la boucle de filtration, à l'intérieur d'une cuve d'ozonation 17.

La figure 8 représente un mode de réalisation de la boucle de filtration de l'invention, au sein de laquelle a été placé un filtre biologique aéré 20, qui joue le rôle du pot de dégazage. Ce filtre biologique aéré peut avantageusement être réalisé à l'aide de matériaux flottants où l'eau à traiter, additionnée éventuellement de réactifs, est injectée en amont des matériaux supports de la biomasse.

Deux exemples comparatifs de microfiltration, avec et sans injection de bulles d'air ozoné dans la boucle de filtration, sont présentés ci-après :

### Exemple 1

Une eau de forage contenant en moyenne 0,3 mg/l de fer, et d'une turbidité 2 NTU a été traitée par deux types de traitement :
1 - Traitement par ultrafiltration tangentielle sur membrane (porosité = 500 Å). La vitesse de circulation est de 4,4 m/s, la pression transmembranaire est de 1 bar, un décolmatage flux inverse est effectué pendant 5s toutes les 5 minutes.
2 - Traitement à l'ozone (taux 1 g/m³) suivi d'ultrafiltration sur membrane, les réglages de fonctionnement étant identiques au premier traitement, et l'ozone étant injectée en ligne dans la boucle de recirculation, en amont de la membrane, par émulseur.

Les débits obtenus par ces deux traitements sont donnés en Table I

**TABLE I**

| Type de traitement | Flux de perméat obtenu en début de fonctionnement | Flux de perméat obtenu au bout de 3h de fonctionnement |
|---|---|---|
| 1 Microfiltration sans ozone dans la boucle | 0,85 m*³*/h.m*²*.bar | 0,700 m*³*/h.m*²*.bar |
| 2 Microfiltration avec ozone selon le procédé | 0,85 m*³*/h.m*²*.bar | 0,900 m*³*/h.m*²*.bar |

Cet exemple montre que les bulles d'air ozoné ne perturbent pas les performances de l'ultrafiltration ; le flux de perméat est même amélioré de l'ordre de 30 % par le couplage ozone/filtration tangentielle.

### Exemple 2

De l'eau de Seine a été traitée par les deux types de traitements suivants:
1 - L'eau de Seine floculée est traitée par microfiltration tangentielle sur membrane (porosité = 0,2 »m). La vitesse de circulation est 4,4 m/sec, la pression transmembranaire est de 1 bar ; un décolmatage flux inverse est effectué pendant 5s/5mn ; une purge de déconcentration est fixée à 30l/h.
2 - Traitement à l'ozone (taux 1g/m³) de l'eau de seine préalablement floculée, suivi d'ultrafiltration sur membrane ; les réglages de fonctionnement sont identiques au premier traitement ; l'ozone est injecté dans la boucle de recirculation, en ligne, en amont de la membrane, par un émulseur.

Les résultats obtenus par les deux traitements sont donnés en Table II :

**TABLE II**

| | Matières organiques | | | | Flux de perméat | |
|---|---|---|---|---|---|---|
| | EB mgO₂/l | EF mgO₂/l | Abt mgO₂/l | | m³/m².h.bar point O | m³/m².h.bar ap. 8h. |
| Traitement 1 Eau de Seine floculée | 7,13 | 2 | 5,13 | 70% | 1 | 0,6 |
| Traitement 2 Eau de Seine floculée ozonée en amont de la membrane | 9,17 | 1,96 | 7,21 | 78% | 1 | 1 |

Le tableau fournit le taux de matière organique (en mg d'O₂ par litre) pour l'eau brute (EB), le filtrat (EF), et le taux différentiel entre ces deux mesures (Abt).

La combinaison de l'ozone au coagulant permet un abattement de la matière organique de 78 %.

Dans les mêmes conditions opératoires, la présence d'air ozoné améliore les performances de la microfiltration : les flux de perméat sont augmentés de 40%.

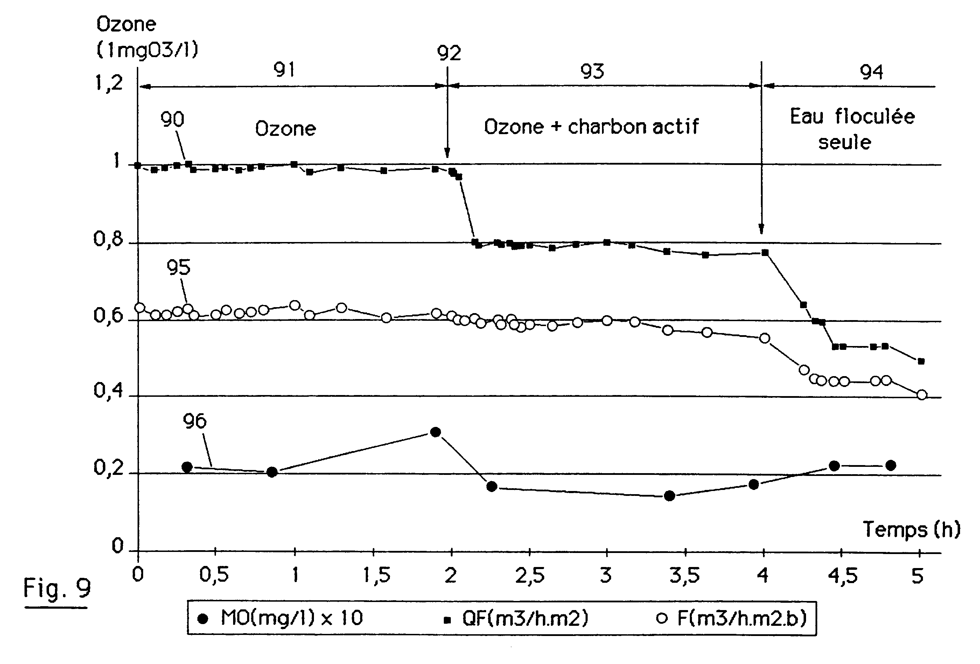

Ceci apparaît notamment dans le graphe de résultats d'essai de la figure 9 représentant les trois courbes d'évolution des valeurs suivantes au cours d'un autre essai :
- Variation du débit de filtrat 90 successivement en présence de microbulles d'air ozoné (91), puis après introduction 92 de charbon actif pulvérulent avec microbulles d'air ozoné (93), et enfin sans additif, seul l'eau floculée circulant dans la boucle (94) ;
- Variation correspondante du flux du filtrat (95) ;
- Variation correspondante du taux de matières organiques dans le filtrat.

L'ozone injecté était à un taux de 1mg/l. La dose de charbon actif additionnée en 92 est de 5g.

Les conditions de l'essai était une vitesse de circulation de 4m/s dans la boucle, un décolmatage par inversion de flux de 5s/5mn et une perte de charge de 0,6 bar dans la boucle.

Il ressort de la courbe 90 que l'adjonction d'air ozoné permet approximativement de doubler le débit du filtrat, par rapport à la circulation d'eau floculée seule (débit d'environ 1m³/h.m², au lieu de 0,5m³/h.m²).

D'autre part, à titre secondaire, on constate une diminution du débit du filtrat lors de l'introduction de charbon actif en poudre, en présence d'injection d'air ozoné dans le liquide à traiter, par rapport au cas où seul de l'air ozoné est injecté. Ceci s'explique par le fait que l'adjonction de charbon actif augmente le taux de matière en suspension dans l'eau à traiter. En revanche, on note sur la courbe 96 une diminution corrélative sensible du taux de matière organique dans le filtrat, qui montre la synergie charbon actif/bulles d'ozone caractéristique de l'un des modes de mise en oeuvre préférentiels du procédé de l'invention.

L'invention ne se limite bien entendu pas à ces exemples de réalisations.

Ainsi, le procédé de l'invention peut également être mis en oeuvre pour maintenir en milieu désinfectant ladite boucle de filtration à membrane tangentielle lors des périodes de non-utilisation de ladite boucle pour le traitement de liquides. Cette opération de maintenance peut s'effectuer aussi bien de façon continue, que de façon périodique.

## Revendications

1. Procédé pour la filtration et l'épuration de l'eau, du type consistant à faire passer le liquide à traiter dans une installation du type comprenant une boucle de filtration avec pompe de recirculation (4), et au moins une membrane (1) de filtration tangentielle caractérisé en ce qu'il comprend une étape consistant à ajouter un gaz oxydant comprenant de l'ozone à l'eau à traiter, dans la boucle en amont de la membrane de façon à former des microbulles dudit gaz d'une taille telle qu'elles créent des turbulences dans l'eau au droit de la membrane qui, couplées au phénomène d'oxydation, limitent le colmatage de ladite membrane (1) et conduisent à l'amélioration du débit et des qualités physico-chimiques du filtrat.

2. Procédé selon la revendication 1 caractérisé en ce que la taille desdites microbulles est de 10 »m à 2 mm de diamètre.

3. Procédé selon l'une quelconque des revendications 1 ou 2 caractérisé en ce que le taux et la concentration dudit gaz adjoint à l'eau à traiter sont variables en fonction de la qualité de l'eau à traiter et/ou du taux de gaz résiduel dissous souhaité.

4. Procédé selon l'une quelconque des revendications 1 à 3 caractérisé en ce que l'eau à traiter reçoit un conditionnement chimique préalable en amont de ladite boucle de filtration.

5. Procédé selon l'une quelconque des revendications 1 à 4 caractérisé en ce que ladite boucle de circulation comporte un pot de dégazage monté en aval de la membrane, et adapté à la protection de la pompe de recirculation (4) contre lesdites microbulles.

6. Procédé selon l'une quelconque des revendications 1 à 5 caractérisé en ce qu'il comprend une étape consistant à injecter des réactifs chimiques et/ou des adsorbants dans la boucle de filtration.

7. Procédé suivant la revendication 6, caractérisé en ce qu'un dispositif mélangeur statique est monté en aval des moyens (10) d'injection de réactifs chimiques et/ou d'adsorbants dans la boucle de filtration.

8. Procédé selon l'une quelconque des revendications 6 et 7 caractérisé en ce que ledit adsorbant est du charbon actif.

9. Procédé selon l'une quelconque des revendications 1 à 8, notamment pour effectuer un traitement des eaux chargées de matières organiques, ou un traitement de déferrisation ou de démanganisation, caractérisé en ce qu'il comprend une étape consistant à injecter un autre gaz oxydant dans ladite boucle de filtration.

10. Procédé selon la revendication 9 caractérisé en ce que l'autre gaz oxydant est injecté dans la boucle grâce à des moyens appartenant au groupe comprenant des émulseurs (12,16) montés en amont du pot de dégazage, des poreux placés dans le pot de dégazage (13,15), des dispositifs d'ozoflottation, et des cuves d'ozonation (17).

11. Procédé selon la revendication 10, dans le cas d'un second moyen d'injection de gaz oxydant dans la boucle constitué par un dispositif d'ozoflottation sous pression, caractérisé en ce que ladite ozonation est assurée par des poreux (13,15), dont le balayage est assuré par la conduite de recirculation.

12. Procédé selon la revendication 10, dans le cas où lesdits seconds moyens d'injection d'un gaz oxydant sont constitués par un dispositif d'ozoflottation sous pression, caractérisé en ce que l'introduction du gaz oxydant s'effectue par l'intermédiaire d'un émulseur (16).

13. Procédé selon l'une quelconque des revendications 1 à 12 caractérisé en ce que ledit gaz oxydant est l'air ozoné.

14. Procédé selon la revendication 10, dans le cas où ledit liquide à traiter comporte des eaux fortement chargées en ammoniaque, caractérisé en ce que ledit pot de dégazage est constitué par un filtre biologique aéré (20).

15. Procédé selon la revendication 14, caractérisé en ce que ledit filtre biologique (20) comprend des matériaux supports de biomasse flottants, en amont desquels sont disposés les moyens d'injection dudit liquide à traiter.

16. Procédé selon l'une quelconque des revendications 1 à 15, caractérisé en ce qu'on met en oeuvre l'injection de microbulles dudit gaz oxydant contenant de l'ozone pour maintenir en milieu désinfectant ladite boucle de filtration à membrane tangentielle lors des périodes de non-utilisation de ladite boucle pour le traitement de liquides.

17. Procédé selon l'une quelconque des revendications 1 à 15, caractérisé en ce qu'on met en oeuvre l'injection de microbulles dudit gaz oxydant pour régénérer ladite membrane de filtration tangentielle au cours de cycles périodiques de régénération, ladite action de régénération étant contrôlée au moyen du taux de gaz résiduel dissous dans le liquide de régénération.

## Claims

1. Process for the filtration and purification of water, of the type in which the liquid to be treated is passed through an installation of the type comprising a filtration loop with recirculation pump (4), and at least one tangential filtration membrane (1) characterized in that it comprises a stage consisting of adding an oxidizing gas comprising ozone to the water to be treated, in the loop upstream from the membrane so as to form microbubbles of the said gas having a size such that they create turbulence within the water perpendicular to the membrane which, coupled with the oxidation phenomenon, limits clogging of the said membrane (1) and leads to an improvement in the flow rate and the physico-chemical properties of the filtrate.

2. Process according to Claim 1, characterized in that the diameter of the said microbubbles is from 10 »m to 2 mm.

3. Process according to either of Claims 1 or 2 characterized in that the amount and concentration of the said gas added to the water to be treated vary according to the quality of the water to be treated and/or the desired level of residual dissolved gas.

4. Process according to any one of Claims 1 to 3, characterized in that the water to be treated receives prior chemical treatment upstream from the said filtration loop.

5. Process according to any one of Claims 1 to 4, characterized in that the said circulation loop includes a degassing chamber mounted downstream from the membrane, suitable for protecting the recirculation pump (4) from the said microbubbles.

6. Process according to any one of Claims 1 to 5, characterized in that it comprises a stage consisting of injecting chemical reagents and/or adsorbents into the filtration loop.

7. Process according to Claim 6, characterized in that a static mixing device is mounted downstream from the means (10) of injecting chemical reagents and/or adsorbents into the filtration loop.

8. Process according to either of Claims 6 or 7, characterized in that the said adsorbent is active charcoal.

9. Process according to any one of Claims 1 to 8, in particular for treating waters loaded with organic matter, or for removing iron or manganese, characterized in that it comprises a stage consisting of injecting another oxidizing gas into the filtration loop.

10. Process according to Claim 9, characterized in that the other oxidizing gas is injected into the loop using means belonging to a group comprising emulsifiers (12, 16) mounted downstream from the degassing chamber, porous bodies placed in the degassing chamber (13, 15), ozoflotation devices and ozonization vessels (17).

11. Process according to Claim 10, in the case of a second means of injecting the oxidizing gas into the loop consisting of an ozoflotation device under pressure, characterized in that the said ozonization is brought about by porous bodies (13,15), the scavenging of which is achieved by the process of recirculation.

12. Process according to Claim 10, in the case where the said second means of injecting an oxidizing gas consists of an ozoflotation device under pressure characterized in that the introduction of oxidizing gas is carried out by means of an emulsifier (16).

13. Process according to any one of Claims 1 to 12 characterized in that the said oxidizing gas is ozonized air.

14. Process according to Claim 10, in the case where the said liquid to be treated comprises waters heavily loaded with ammonia, characterized in that the said degassing chamber consists of an aerated biological filter (20).

15. Process according to Claim 14, characterized in that the said biological filter (20) comprises floating biomass supporting materials, downstream from which are arranged means for injecting the said liquid to be treated.

16. Process according to any one of Claims 1 to 15, characterized in that injection of microbubbles of the said oxidizing gas containing ozone is carried out in order to maintain the said tangential membrane filtration loop in a disinfecting environment during periods of non-utilization of the said loop for the treatment of liquids.

17. Process according to any one of Claims 1 to 15, characterized in that injection of microbubbles of the said oxidising gas is carried out in order to regenerate the said tangential filtration membrane during periodic regeneration cycles, the said action of regeneration being controlled by means of the amount of residual dissolved gas in the regeneration liquid.

## Patentansprüche

1. Verfahren zum Filtern und Reinigen von Wasser,
darin bestehend, daß die zu behandelnde Flüssigkeit durch eine Vorrichtung des Typs läuft, die eine Filterschleife mit Rezirkulierungspumpe (4) und mindestens eine tangentielle Filtermembrane (1) besitzt, gekennzeichnet durch das Vorhandensein eines Schrittes, bei dem in der Schleife oberhalb der Membrane ein ozonhaltiges Oxydationsgas dem zu behandelnden Wasser zugegeben wird, um Mikrobläschen dieses Gases einer solchen Größe zu bilden,
daß sie Turbulenzen im Wasser am Ort der Membrane erzeugen, die in Zusammenwirkung mit dem Oxydierungsvorgang das Verstopfen der Membrane (1) einschränken und den Durchsatz sowie die physikalisch-chemischen Eigenschaften des Filtrats verbessern.

2. Verfahren gemäß Anspruch 1,
dadurch gekennzeichnet, daß der Durchmesser der Mikrobläschen zwischen 10 »m und 2 mm liegt.

3. Verfahren gemäß einem der Ansprüche 1 oder 2,
dadurch gekennzeichnet, daß die Rate und die Konzentration des Gases, das dem zu behandelnden Wasser zugefügt wird, als Funktion der Wasserqualität und/oder der gewünschten Rate an gelöstem Restgas variiert.

4. Verfahren gemäß einem der Ansprüche 1 bis 3,
dadurch gekennzeichnet, daß das zu behandelnde Wasser vorab oberhalb der Filterschleife einer chemischen Behandlung ausgesetzt wird.

5. Verfahren gemäß einem der Ansprüche 1 bis 4,
dadurch gekennzeichnet, daß die Zirkulationsschleife einen Ausgasungstopf enthält, der nach der Membrane angebracht und geeignet ist, die Rezirkulierungspumpe (4) gegen die Mikrobläschen zu schützen.

6. Verfahren gemäß einem der Ansprüche 1 bis 5,
dadurch gekennzeichnet, daß es einen Schritt umfaßt, bei dem chemische Reagenzien und/oder Absorptionsmittel in die Filterschleife gespeist werden.

7. Verfahren gemäß Anspruch 6,
dadurch gekennzeichnet, daß eine statische Mischvorrichtung vor den Mitteln (10) zum Einspeisen der chemischen Reagenzien und/oder der Absorptionsmittel in der Filterschleife angebracht ist.

8. Verfahren gemäß einem der Ansprüche 6 oder 7,
dadurch gekennzeichnet, daß das Absorptionsmittel aus Aktivkohle besteht.

9. Verfahren gemäß einem der Ansprüche 1 bis 8, insbesondere zur Behandlung von Wasser, das mit organischen Stoffen belastet ist, oder zur Durchführung einer Eisenentfernung oder einer Entmanganisierung, gekennzeichnet durch das Vorhandensein eines Schrittes, bei dem ein anderes Oxydierungsgas in die Filterschleife eingespeist wird.

10. Verfahren gemäß Anspruch 9,
dadurch gekennzeichnet, daß das andere Oxydierungsgas in die Schleife durch Mittel der Art eingespeist wird, die Emulgationsgeräte (12, 16), welche vor dem Ausgasungstopf angebracht sind, im Ausgasungstopf untergebrachte poröse Materialien (13, 15), Vorrichtungen zur Ozon-Flotation sowie Ozonisierungströge (17) umfassen.

11. Verfahren gemäß Anspruch 10, für den Fall des Vorhandenseins einer zweiten Einspeisung von Oxydierungsgas in die Schleife, bestehend aus einer Ozon-Flotationsvorrichtung unter Druck,
dadurch gekennzeichnet, daß die Ozonisierung durch poröse Materialien (13, 15) gewährleistet wird, deren Überfließen durch die Rezirkulierungsleitung sichergestellt wird.

12. Verfahren gemäß Anspruch 10, für den Fall, daß die zweite Einspeisung von Oxydierungsgas aus einer Ozon-Flotationsvorrichtung unter Druck besteht,
dadurch gekennzeichnet, daß die Einspeisung des Oxydierungsgases mittels eines Emulgationsgeräts (16) stattfindet.

13. Verfahren gemäß einem der Ansprüche 1 bis 12,
dadurch gekennzeichnet, daß das Oxydierungsgas ozonhaltige Luft ist.

14. Verfahren gemäß Anspruch 10, für den Fall, daß die zu behandelnde Flüssigkeit stark ammoniakbelastetes Wasser enthält,
dadurch gekennzeichnet, daß der Ausgasungstopf aus einem belüfteten biologischen Filter (20) besteht.

15. Verfahren gemäß Anspruch 14,
dadurch gekennzeichnet, daß das biologische Filter (20) über schwimmende Materialien verfügt, welche als Träger von Biomasse dienen, vor denen sich die Einspeisung des zu behandelnden Wassers befindet.

16. Verfahren gemäß einem der Ansprüche 1 bis 15,
dadurch gekennzeichnet, daß die Einspeisung von Mikrobläschen des ozonhaltigen Oxydierungsgases angewandt wird, um ein desinfizierendes Milieu in der Filterschleife mit tangentieller Membrane aufrechtzuerhalten, wenn sie nicht zur Behandlung von Flüssigkeiten betrieben wird.

17. Verfahren gemäß einem der Ansprüche 1 bis 15,
dadurch gekennzeichnet, daß die Einspeisung von Mikrobläschen des ozonhaltigen Oxydierungsgases angewandt wird, um die tangentielle Filtermembrane im Laufe periodischer Regenerationszyklen zu regenerieren, wobei die Regenerierung durch den Anteil an gelöstem Restgas in der Regenerierungsflüssigkeit gesteuert wird.
